# FASCICULE DE BREVET EUROPEEN

(11) **EP 0 993 973 B1**
(45) Date de publication et mention de la délivrance du brevet: **18.06.2003**
(21) Numéro de dépôt: 99402506.2
(22) Date de dépôt: 12.10.1999
(51) Int. Cl.: B60G 17/056

(54) **Système de régulation pour suspension de véhicule automobile**
Steuervorrichtung für eine Radaufhängung eines Kraftfahrzeuges
Control system for a motor vehicle suspension

(30) Priorité: 13.10.1998 FR 9812808
(43) Date de publication de la demande: 19.04.2000
(73) Titulaire: AUTOMOBILES PEUGEOT, 75116 Paris (FR); AUTOMOBILES CITROEN, 92200 Neuilly-sur-Seine (FR)
(72) Inventeur: Lamorlette, Bruno, 78800 Houilles (FR)
(74) Mandataire: Thinat, Michel

(56) Documents cités:
- EP-A- 0 110 619
- EP-A- 0 255 412
- EP-A- 0 837 274

## Description

L'invention concerne un système de régulation pour une suspension de véhicule automobile permettant de mettre en service une sphère supplémentaire pour modifier la raideur de la suspension, du type décrit dans le préambule de la revendication 1.

Un régulateur de ce type est connu par le document EP-A-0255-412. L'état de la technique comporte encore les documents EP-A-0110-619 et EP-A-0837-274. Mais, ces documents décrivent seulement des électrovannes utilisables dans des systèmes de suspension de véhicule automobile.

La présente invention a pour but de proposer un régulateur qui améliore le régulateur connu susmentionné.

Pour atteindre ce but, le régulateur selon l'invention comporte les caractéristiques qui sont énoncées dans la partie caractérisante de la revendication 1.

D'autres caractéristiques de l'invention sont décrites dans les revendications dépendantes 2 à 14.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- Les figures 1 et 2 sont des vues en coupe axiale d'un système de régulation selon la présente invention et montrent celui-ci à deux états de fonctionnement différents;
- La figure 3 est une vue en coupe suivant la ligne III-III de la figure 2;
- La figure 4 est une vue à plus grande échelle de l'agencement d'électrovanne à trois voies du système de régulation selon les figures 1 à 3;
- La figure 5 est une vue de dessus de la face libre d'un siège d'étanchéité de l'électrovanne selon la présente invention;
- La figure 6 est une vue en coupe selon la ligne VI-VI de la figure 5;
- La figure 7 est une vue de dessus d'un guide-bille de l'électrovanne selon la présente invention;
- La figure 8 est une vue en coupe selon la ligne VIII-VIII de la figure 7 ;
- la figure 9 est une vue similaire à la figure 4, mais montre une autre variante de réalisation ;
- la figure 10 est une vue en coupe le long de la ligne X-X de la figure 9 ; et
- la figure 11 est une vue similaire à la figure 1 mais montre un mode de réalisation différent.

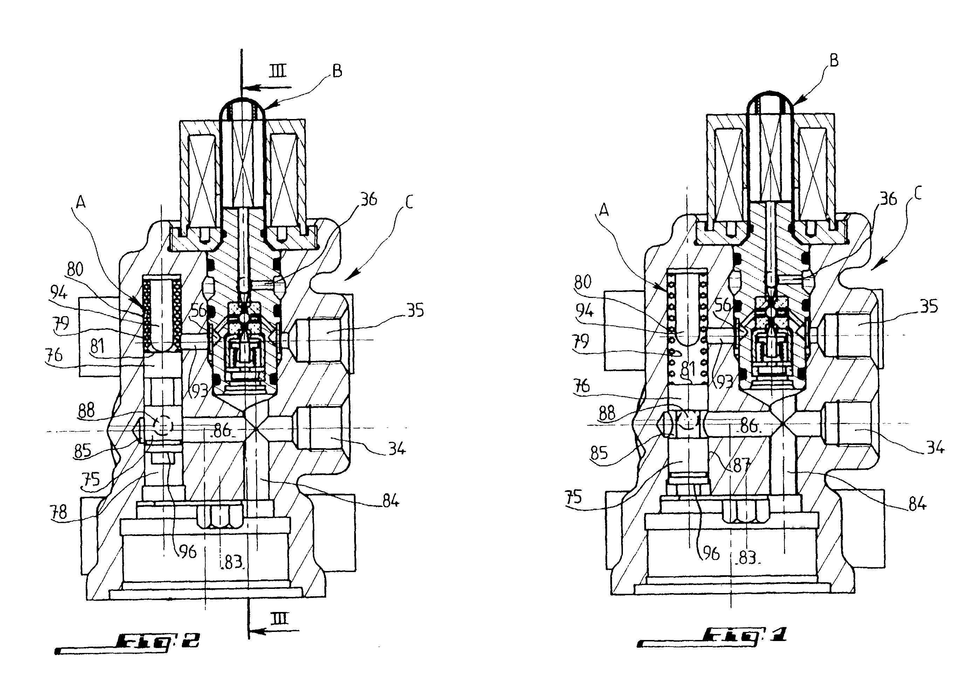

En se reportant aux figures 1 à 3, on constate qu'un système de régulation selon l'invention comporte un dispositif régulateur A et un agencement d'électrovanne à trois voies B, qui sont montés dans un bloc hydraulique C.

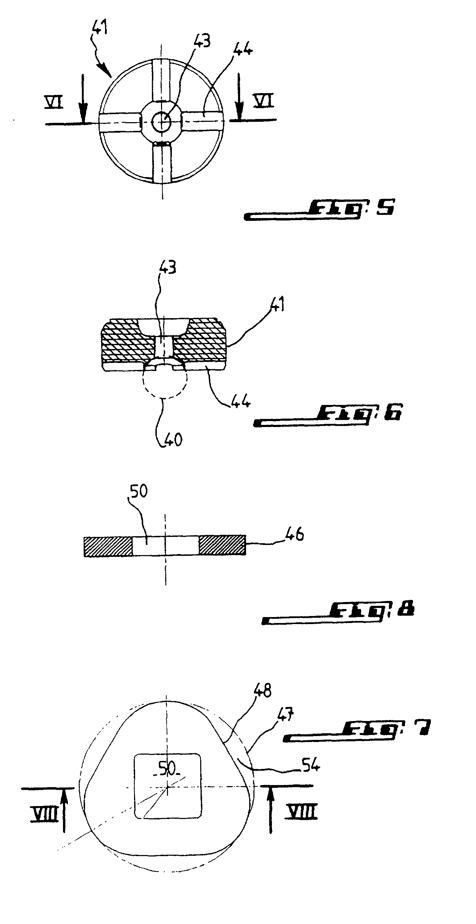

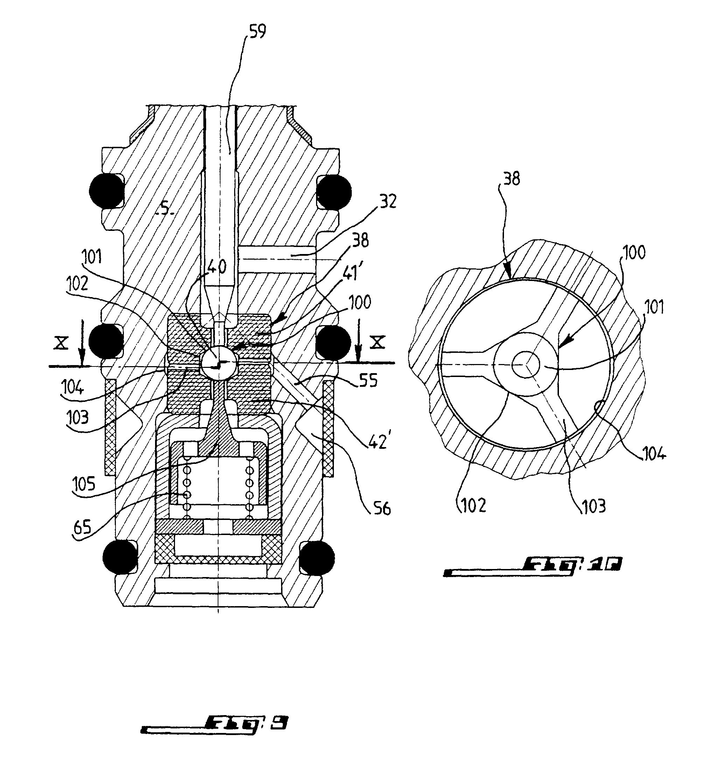

Les figures 4 à 8 montrent à titre d'exemple un agencement d'électrovanne B à trois voies qui est avantageusement utilisé dans le cadre de l'invention. On décrira ci-après, tout d'abord, la structure de cet agencement puisque l'électrovanne à trois voies représentée détermine la configuration du dispositif régulateur A et du bloc hydraulique C.

Comme il ressort de la figure 4, l'agencement d'électrovanne B selon l'invention comprend essentiellement une électrovanne 1 et une bride annulaire 2, pour la fixation de l'électrovanne sur un support 3 représenté schématiquement mais qui, sur les figures 1 à 3, est le bloc hydraulique C. Le support 3 est pourvu d'un évidement 4 dans lequel est logé le corps 5 de l'électrovanne.

L'électrovanne comprend le corps susmentionné 5 qui se compose de deux parties cylindriques, à savoir une partie inférieure 6 engagée dans l'évidement 4 du support 3 et une partie supérieure 7 de plus faible diamètre, un noyau 9 monté mobile dans l'axe de la partie supérieure 7, avec interposition d'une cale d'entrefer 10, un tube 11 en un matériau amagnétique entourant le noyau 9 et la partie 7, ainsi qu'un ensemble qui est formé par une bobine 13 et un capot 14 surmoulé sur la bobine et qui entoure coaxialement le tube 11. Sur la partie supérieure du capot est emmanché un capuchon en matière plastique 15 qui assure l'étanchéité à l'égard des agents extérieurs.

Cet ensemble est monté sur la face supérieure de la bride 2. Cette dernière est fixée par vissage dans un élargissement cylindrique 16 du support 3, pratiqué dans celui-ci au niveau de la sortie de l'évidement 4, coaxialement à ce dernier. La surface périphérique cylindrique 17 de la bride et la face périphérique 18 de l'élargissement 16 comportent donc des filetages complémentaires.

La bride possède, dans sa face supérieure, deux trous d'entraînement 20 qui permettent de la serrer et d'indexer la bobine 13.

La bride 2 possède également une gorge circulaire 21 coaxiale dans cette face supérieure et adaptée pour permettre l'emmanchement de la partie inférieure 22 du capot, en saillie par rapport à la bobine 13, par serrage, et donc pour protéger le système intérieur de la corrosion. D'autre part, le perçage central 24 de la bride 2 qui permet son montage glissant sur le tube 11 est évasé en 25 au niveau de la face inférieure de la bride et permet la fixation amovible du tube 11 dans le support 3, par l'insertion de cette partie inférieure également évasée 27 du tube 11 entre la partie 25 de la bride et une surface oblique d'appui approprié 27a du corps 5.

L'électrovanne est configurée pour pouvoir fonctionner comme électrovanne à trois voies. A cette fin, la partie inférieure 6 du corps 5 comporte des voies internes 30, 31 et 32 en communication respectivement avec une voie 34 d'arrivée de fluide hydraulique haute pression, une voie 35 de connexion à un circuit utilisateur et une voie 36 de retour vers le réservoir, toutes pratiquées dans le support 3, ainsi qu'un dispositif 38 de mise en communication, d'une part, de la voie haute pression 34 et de la voie d'utilisation 35 et, d'autre part, de cette voie 35 et de la voie de retour 36 vers le réservoir.

Le dispositif 38 comporte à cette fin une bille 40 à laquelle sont associés deux sièges d'étanchéité 41, 42, avantageusement de structure identique et diamétralement opposés par rapport à la bille 40.

Comme on le voit sur les figures 5 et 6, chaque siège 41, 42 présente une forme générale cylindrique traversée par un passage axial central 43 que la bille 40 est destinée à obturer et comporte, dans sa face avant d'application de la bille, quatre rainures radiales 44 qui sont décalées les unes des autres de 90°. Comme on le voit sur la figure 6, le passage axial 43 et les rainures radiales 44 ne communiquent pas lorsque la bille 40 est appliquée contre son siège.

Entre les deux sièges d'étanchéité 41 et 42 est interposée une plaque guide-bille 46 dont la périphérie s'inscrit dans un cercle 47 de même diamètre que les sièges d'étanchéité 41 et 42 et qui présente trois méplats 48 angulairement équidistants les uns des autres. La partie centrale du guide-bille 46 comprend un évidement de forme carrée 50 pour le guidage de la bille.

Le dispositif de mise en communication 38 ainsi formé est placé dans un logement cylindrique 52 prévu au fond d'un espace interne cylindrique ouvert à l'extrémité interne du corps 5 qui constitue la voie interne 30 de réception du fluide haute pression. Les méplats 48 du porte-bille 46 et la paroi cylindrique circulaire du logement délimitent entre eux trois chambres 54.

Etant donné la disposition angulairement décalée de 120° des chambres 54, il y a toujours communication entre l'une de ces chambres et une des quatre rainures 44 des sièges d'étanchéité 41 et 42, d'une part, et, d'autre part, l'un des quatre conduits 55 ménagés dans le corps 5, qui forment la voie précitée 31 de l'électrovanne et communiquent avec la voie d'utilisation 35 par l'intermédiaire d'une rainure annulaire 56 dans la surface périphérique de ce corps. Par conséquent, le sens de montage du dispositif de soupape dans son logement 52 n'a plus d'importance.

Le corps d'électrovanne est en outre percé, au-dessus du logement 52, par un canal axial 58, en prolongement axial du passage 43 du siège d'étanchéité supérieur 41 mais d'un diamètre supérieur à celui de ce passage. Dans le canal 58 s'étend axialement un poussoir 59 qui est solidaire du noyau mobile 9 de l'électrovanne et comporte à son extrémité libre un embout cylindrique à section transversale circulaire 60 de plus faible diamètre qui passe axialement à travers le passage 43 du siège d'étanchéité 41 et constitue un moyen de commande de la bille 40, comme il ressort de la figure 4. Un deuxième poussoir de commande 62 agit sur la bille 40, à un endroit diamétralement opposé à l'embout 60 du poussoir 58. Ce poussoir 62 comporte également un embout 63 de plus faible diamètre, qui passe à travers le passage axial central 43 du siège d'étanchéité inférieur 42. Ce poussoir est appliqué par un ressort 65 contre la bille 40. Le ressort est interposé entre une pièce annulaire 66 solidaire du poussoir et une rondelle 67 fixe, qui est percée en son centre. La pièce d'appui 66 du ressort 65 est mobile axialement dans une coupelle cylindrique de guidage 68 montée fixe dans la cavité 30 du corps d'électrovanne et comporte des trous permettant l'écoulement du fluide haute pression vers le passage 43 du siège d'étanchéité 42.

Il est encore à noter que la partie du perçage axial 58 de passage du poussoir 59 qui est adjacente au siège d'étanchéité supérieur 41 présente un diamètre supérieur à celui du poussoir. Des conduits internes qui forment la voie 32 et communiquent avec la voie de retour vers le réservoir 36 débouchent dans cette partie de diamètre supérieur.

Pour assurer l'étanchéité entre les différentes voies de l'électrovanne, des joints d'étanchéité annulaires 69 sont interposés entre le corps d'électrovanne 5 et la paroi de l'évidement 4 du support 3, en-dessous et au-dessus de la voie d'utilisation 35 et au-dessus de la voie de retour 36. Un autre joint d'étanchéité annulaire 70 est interposé entre la partie inférieure du tube 11 et le corps 5, au-dessus de la partie évasée d'ancrage 27 du tube.

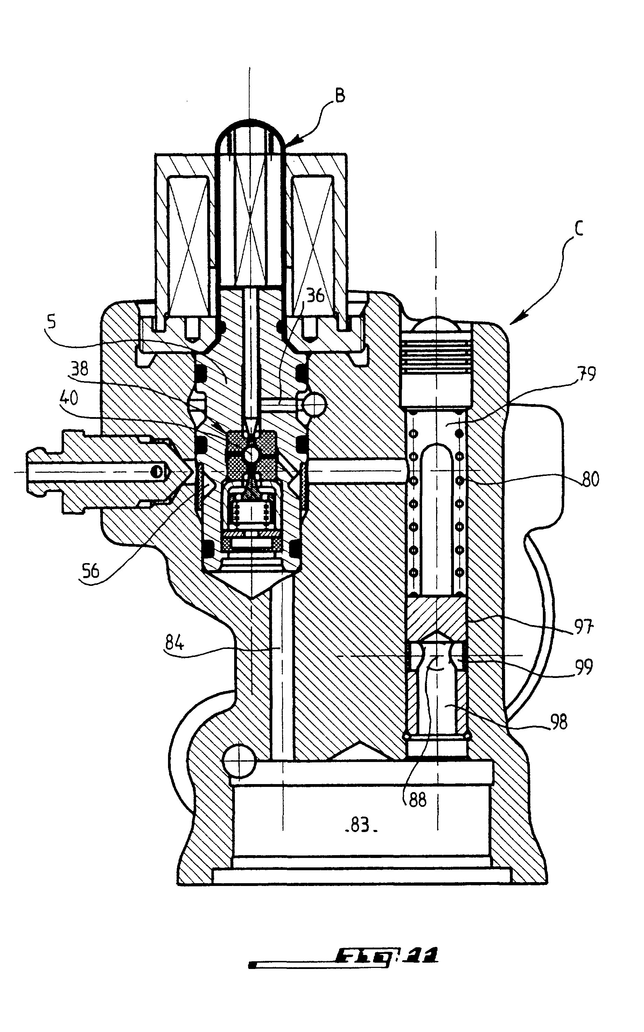

Concernant les deux éléments de siège d'étanchéité 41 et 42, ils sont réalisés avantageusement en une matière déformable telle qu'une matière plastique et peuvent être réalisés par moulage. Ils peuvent être emmanchés dans le logement 52 et garantir l'étanchéité vis-à-vis du corps d'électrovanne. Le guide-bille 46 peut être réalisé séparément des deux sièges d'étanchéité ou intégré à chacun de ceux-ci comme on le voit sur les figures 9 et 10.

Sur ces figures 9 et 10, le guide-bille est intégré aux sièges d'étanchéité portant maintenant les références 41' et 42'. Chaque siège d'étanchéité comporte, sur la face située du coté de la bille 40, un logement central 100 pour cette dernière, dont le fond 101 a un profil conique et dont la partie supérieure annulaire 102 présente une face guide-bille cylindrique, c'est-à-dire accomplissant la fonction de la plaque guide-bille 46. Le siège comprend encore plusieurs rainures radiales 103, par exemple au nombre de trois, disposées à 120° les unes des autres. Ces dernières débouchent, d'une part, dans le logement 100 et d'autre part, dans une gorge périphérique 104. Dans cette variante de réalisation, on utilise un seul conduit 55 de communication avec la voie d'utilisation 35. On constate encore que, dans cette variante de réalisation, le poussoir 62 et la pièce 66 de la figure 4 sont réalisés en une seule pièce 105 et le ressort 65 se trouve à l'intérieur de celle-ci.

En se référant à nouveau à la figure 4, on remarquera encore que le capuchon 15 comporte une nervure annulaire interne 72 qui s'engage dans une rainure annulaire 73 correspondante dans la face périphérique de l'extrémité supérieure du capot 14, en bloquant ainsi le capuchon dans sa partie emmanchée sur le capot.

Concernant le fonctionnement de l'agencement d'électrovanne qui vient d'être décrit, il permet de mettre un appareil utilisateur en communication par la voie 35, soit avec une source de haute pression reliée à la voie 34 du support, soit avec le circuit de retour au réservoir à travers la voie de retour 36.

En effet, lorsque l'électrovanne n'est pas excitée, le poussoir 62, sous l'action de son ressort 65, pousse la bille 40 sur son siège d'étanchéité supérieur 41 ou 41'. Etant donné que la bille est ainsi soulevée de son siège d'étanchéité inférieur 42 ou 42', du liquide sous pression peut passer de la voie haute pression 34 dans la voie d'utilisation 35, à travers les rainures 44 ou 103 ménagées dans ce siège et les conduits 55. Lorsque l'électrovanne est excitée, le poussoir 59 de l'électro-aimant applique la bille 40 sur son siège inférieur 42 ou 42' en permettant au liquide de passer de la voie d'utilisation 35 à la voie de retour 36.

L'électrovanne B, qui vient d'être décrite, est montée dans le bloc C du système de régulation selon les figures 1 à 3 pour y coopérer avec le dispositif de régulation A qui sera décrit ci-après.

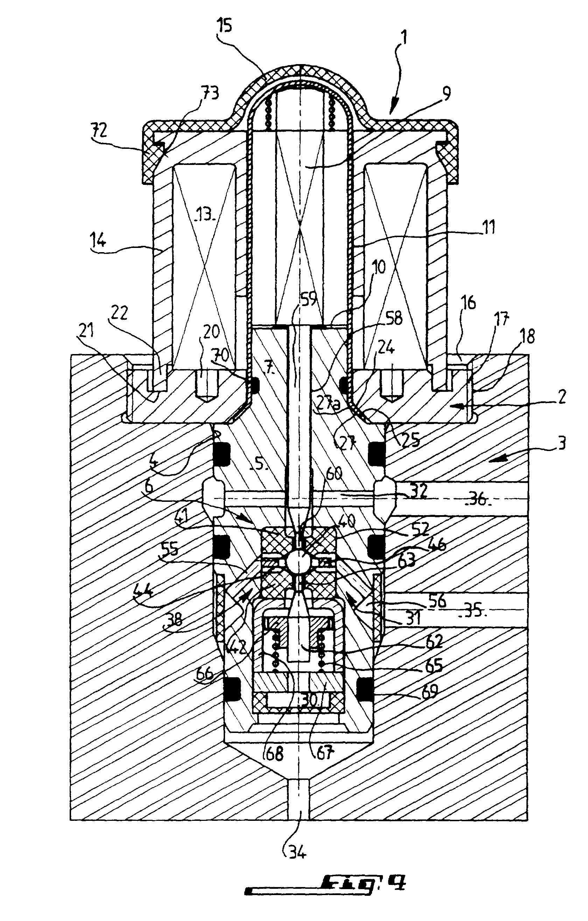

Le dispositif hydraulique A comprend essentiellement un tiroir 75 qui est monté axialement mobile dans une cavité cylindrique 76 aménagée dans le bloc hydraulique C. La cavité 76 est séparée par le tiroir en deux chambres de volume variable en fonction des déplacements du tiroir, à savoir une chambre 78 située en-dessous du tiroir et une chambre 79 disposée au-dessus et dans laquelle est logé un ressort de compression 80 interposé entre le fond de la chambre 79 et la face supérieure 81 du tiroir. La chambre 78 est en communication avec l'espace d'entrée 83 d'un fluide hydraulique haute pression. Cet espace permet la fixation de la sphère supplémentaire de suspension (qui permet de faire varier la raideur de celle-ci) et communique avec elle : le liquide hydraulique est donc à la même pression dans l'espace 83 que dans la sphère supplémentaire (qui n'est pas représentée sur les dessins). C'est pourquoi, dans la suite de la présente description, cet espace sera assimilé à cette sphère supplémentaire. Cette sphère 83 communique également avec la voie haute pression 34 de l'électrovanne par un canal 84. La voie haute pression 34 est en communication par un canal 86 avec la cavité 76 qui s'étend par ailleurs parallèlement à l'axe de l'électrovanne 1. Au niveau du canal transversal 86 débouche également dans la cavité 76 un conduit 88 qui est relié aux voies 90 et 91 du bloc hydraulique C, qui communiquent respectivement avec la suspension droite et la suspension gauche du véhicule (fig.3).

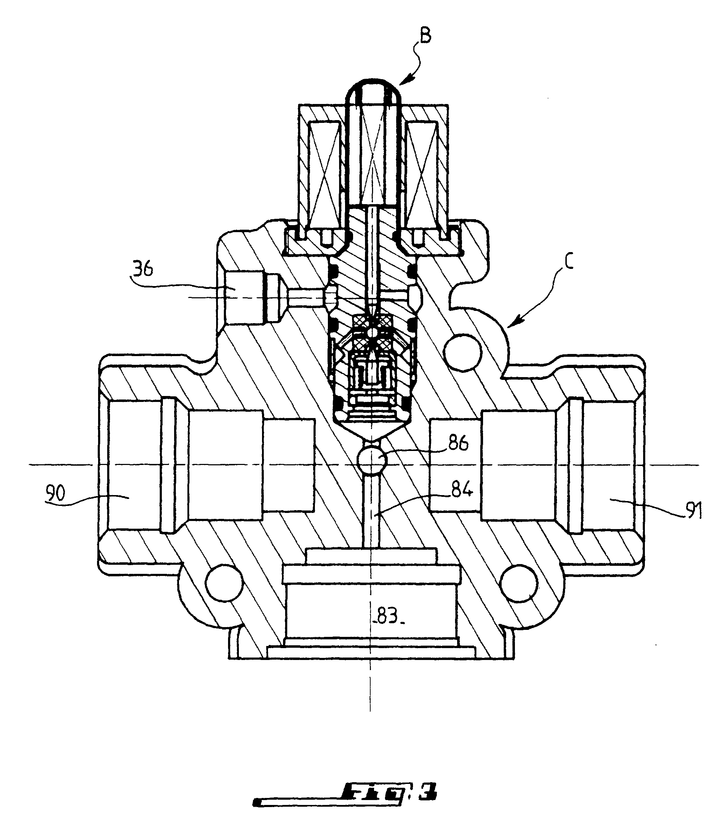

On constate encore sur les figures 1 et 2 que la voie d'utilisation 35 du bloc C communique par un canal interne 93 avec la chambre supérieure 79 de la cavité 76. Le canal 93 débouche dans cette chambre au-dessus de la position haute du tiroir 75, déterminée par une butée 94.

Concernant le fonctionnement du système de régulation selon l'invention, lorsque l'électrovanne 1 n'est pas excitée électriquement, la pression qui règne dans la sphère supplémentaire 83 agit à la fois sur la face d'extrémité frontale inférieure 96 du tiroir 75 et la face frontale d'extrémité supérieure 81. Par conséquent, le tiroir est équilibré et le ressort 80 le pousse et le maintient dans sa position inférieure montrée sur la figure 1. Dans cette position, les deux voies de suspension 90 et 91 communiquent avec la sphère supplémentaire 83. En effet, comme cela a été expliqué plus haut, lorsque l'électrovanne n'est pas excitée, la voie haute pression 34 de celle-ci communique avec la voie d'utilisation 35 et ainsi avec le canal interne 93 s'ouvrant dans la chambre supérieure 79.

Par contre, lorsque l'électrovanne est excitée électriquement, la voie d'utilisation 35, et ainsi le canal interne 93, sont isolés de la voie haute pression 34 et reliés à la voie de retour au réservoir 36. Par conséquent, la pression du fluide hydraulique agissant sur la face inférieure 96 du tiroir est supérieure à celle appliquée sur la face frontale supérieure 81 et le tiroir 75 est déplacé vers le haut, à l'encontre du ressort 80, dans sa position haute montrée sur la figure 2, ce qui a pour conséquence que les communications entre les suspensions et la sphère 83 sont fermées.

La figure 11 montre un autre mode de réalisation de l'agencement d'électrovanne selon l'invention. Dans ce mode de réalisation, le tiroir 75 présenté sur les figures 1 à 4 est remplacé par un tiroir creux désigné par le numéro de référence 97. Il présente un passage longitudinal 98 ouvert à l'extrémité située du côté de la sphère supplémentaire 83 et une gorge périphérique 99 à l'autre extrémité de ce passage. L'extrémité du tiroir sur laquelle agit le ressort est pleine.

Ce mode de réalisation permet de supprimer le passage 86 du mode de réalisation selon les figures 1 à 3, la communication de la sphère supplémentaire 83 avec le conduit 88 relié aux voies 90 et 91 du bloc hydraulique C se faisant à l'intérieur du tiroir par le passage 98 et la gorge 99. Bien entendu le fonctionnement de l'électrovanne est le même que dans le premier mode de réalisation.

Lorsque l'électrovanne est mise à l'échappement, la pression du liquide s'exerce par l'intérieur du tiroir sur l'extrémité supérieure de celui-ci : le tiroir monte, écrase le ressort 80 et sa partie inférieure ferme la communication 88 avec la suspension. Lorsque l'électrovanne permet au liquide de passer dans la chambre 79 contenant le ressort 80, la pression s'exerce sur la partie supérieure du tiroir. Celui-ci est poussé par le ressort et on se retrouve dans la position illustrée : la gorge du tiroir permet la communication entre la sphère supplémentaire 83 et la suspension.

La description de l'invention qui vient d'être faite montre qu'elle permet de supprimer l'accumulateur et les tuyaux utilisés dans les systèmes de régulation connus, grâce à la commande interne au bloc hydraulique. De plus , cette commande permet, grâce à la prise de la pression par la sphère, de minimiser les bruits de commutation.

## Revendications

1. Système de régulation pour une suspension de véhicule automobile, permettant de mettre en service une sphère supplémentaire (83) pour modifier la raideur de la suspension, du type comprenant un tiroir (75) de changement de la raideur pouvant se déplacer sous l'effet d'une pression hydraulique de commande de tiroir, qui est la pression régnant dans la sphère supplémentaire (83) le tiroir (75) qui est monté mobile dans une cavité (76) à l'intérieur d'un bloc hydraulique (C) comportant deux chambres (78, 79) de volume variable séparées par ledit tiroir (75), l'une (78) de ces chambres étant reliée à la sphère supplémentaire (83), **caractérisée en ce que** l'autre chambre (79) loge un ressort (80), et **en ce que** le bloc hydraulique (C) comporte des moyens (B) de mise en communication de la chambre (79) de logement du ressort (80), soit avec la sphère supplémentaire (83), soit avec un conduit (36) de retour au réservoir du système hydraulique.

2. Système selon la revendication 1, **caractérisé en ce que** les moyens de mise en communication (B) comprennent une électrovanne (1) à trois voies.

3. Système selon la revendication 2, **caractérisé en ce que** l'électrovanne (1) est du type comportant une bille (40) coopérant avec un dispositif de siège d'étanchéité et **en ce que** ce dernier comporte deux sièges (41, 42) diamétralement opposés par rapport à la bille (40) et traversés chacun par un passage d'écoulement (43) en communication avec l'une desdites voies (30, 32), et des moyens de commande sélective (59, 62) de la bille (40) pour appliquer celle-ci alternativement sur l'un des sièges (41, 42) en l'écartant de l'autre (42, 41), et **en ce que** l'espace (54) entre les sièges communique avec une troisième voie (31).

4. Système selon la revendication 3, **caractérisé en ce qu'**un guide-bille (46) est interposé entre les deux sièges (41, 42) et les faces en regard des deux sièges comportent au moins une rainure (44) de mise en communication du passage (43) du siège et de l'espace (54) entre les deux sièges.

5. Système selon la revendication 4, **caractérisé en ce que** les rainures (44) sont de préférence au nombre de quatre disposées perpendiculairement les unes aux autres.

6. Système selon l'une des revendications 4 et 5, **caractérisé en ce que** les sièges (41, 42) sont circulaires, **en ce que** le guide-bille (46) s'inscrit dans un cercle de même diamètre que celui des sièges et présente trois méplats (48) angulairement décalés de 120° les uns des autres, **en ce que** l'ensemble formé par les sièges (41, 42) et le guide-bille (46) interposé entre ceux-ci est placé dans un logement de forme complémentaire (52) à l'intérieur du corps de l'électrovanne (5), et **en ce que** les méplats (48) définissent trois chambres en communication avec la troisième voie (35) précitée.

7. Système selon l'une des revendications 3 à 6, **caractérisé en ce que** les deux sièges d'étanchéité (41, 42) sont identiques.

8. Système selon l'une des revendications 4 à 7, **caractérisé en ce que** le guide-bille (46) est réalisé séparément des deux sièges d'étanchéité (41, 42).

9. Système selon l'une des revendications 4 à 7, **caractérisé en ce que** le guide-bille (46) est intégré à chacun des deux sièges d'étanchéité (41, 42).

10. Système selon la revendication 9, **caractérisé en ce que** chaque siège (41', 42') comporte un logement de bille (100) dont le fond (101) a un profil conique et dont la partie supérieure annulaire (102) présente une face guide-bille sensiblement cylindrique.

11. Système selon l'une des revendications 3 à 10, **caractérisé en ce que** les sièges d'étanchéité (41, 42) sont réalisés en une matière déformable telle qu'une matière plastique.

12. Système selon l'une des revendications 3 à 11, **caractérisé en ce que** les deux sièges d'étanchéité (41, 42) sont réalisés par moulage.

13. Système selon l'une des revendications 1 à 12, **caractérisé en ce que** le tiroir (75, 97) est susceptible d'assurer ou d'interrompre une voie de communication de la sphère supplémentaire (83) avec un conduit (88) relié aux suspensions du véhicule, selon que l'électrovanne est excitée électriquement ou non.

14. Système selon la revendication 13, **caractérisé en ce que** le tiroir (97) comporte un passage longitudinal (98) communiquant, à une extrémité du tiroir avec la sphère supplémentaire (83) et, à l'autre extrémité, avec le conduit (88) lorsque l'électrovanne n'est pas excitée.

## Claims

1. System for regulating a motor vehicle suspension, enabling a supplementary sphere (83) to be actuated for modifying the rigidity of the suspension, of the type comprising a slide valve (75) for varying the rigidity and capable of being displaced under the influence of a hydraulic pressure for controlling the slide valve, which is the pressure prevailing in the supplementary sphere (83), the slide valve (75) which is mounted movably in a cavity (76) inside a hydraulic block ( C) comprising two chambers (78, 79) of variable volume separated by said slide valve (75), one (78) of these chambers being connected to the supplementary sphere (83), **characterised in that** the other chamber (79) accommodates a spring (88), and **in that** the hydraulic block ( C) comprises means (B) of connecting the chamber (79) accommodating the spring (80) to both the supplementary sphere (83) and to a return pipe (36) to the reservoir of the hydraulic system.

2. System according to claim 1, **characterised in that** the means of connection (B) include a three-way electric valve (1).

3. System according to claim 2, **characterised in that** the electric valve (1) is of the type comprising a ball (40) interacting with a sealing seat device, **in that** the latter comprises two seats (41, 42) diametrically opposing the ball (40), each traversed by a passage of flow (43) in communication with one of said paths (30, 32), and means for selective control (59, 62) of the ball (40) so that the latter can be applied alternatively to one of the seats (41, 42) by separating it from the other ball (42, 41), and **in that** the space (54) between the seats communicates with a third path (31).

4. System according to claim 3, **characterised in that** a ball guide (46) is inserted between the two seats (41, 42) and the faces opposing the two seats comprise at least one groove (44) for connecting the passage (43) of the seat and the space (54) between the two seats.

5. System according to claim 4, **characterised in that** the grooves (44) are preferably four in number, arranged perpendicularly to each other.

6. System according to one of claims 4 and 5, **characterised in that** the seats (41, 42) are circular, **in that** the guide ball (46) is inscribed within a circle of the same diameter as that of the seats and exhibits three flats (48) offset angularly in relation to each other by 120°, **in that** the assembly formed by the seats (41, 42) and the ball guide (46) inserted between them is mounted in a supplementary housing (52) inside the body of the electric valve (5), and **in that** the flats (48) define three chambers in communication with the third aforementioned path (35).

7. System according to one of claims 3 to 6, **characterised in that** the two sealing seats (41, 42) are identical.

8. System according to one of claims 4 to 7, **characterised in that** the ball guide (46) is constructed separately from the two sealing seats (41, 42).

9. System according to one of claims 4 to 7, **characterised in that** the ball guide (46) is integral with each of the two sealing seats (41, 42).

10. System according to claim 9, **characterised in that** each seat (41', 42') comprises a ball housing (100) whose bottom (101) has a conical profile and whose upper annular section (102) is provided with an essentially cylindrical ball guide.

11. System according to one of claims 3 to 10, **characterised in that** the sealing seats (41, 42) are manufactured from a deformable material such as a plastic material.

12. System according to one of claims 3 to 11, **characterised in that** the two sealing seats (41, 42) are manufactured by moulding.

13. System according to one of claims 1 to 12, **characterised in that** the slide valve (75, 97) is capable of providing or interrupting a path of communication between the supplementary sphere (83) and a pipe (88) connected to the suspensions of the vehicle, dependent on whether or not the electric valve is electrically excited.

14. System according to claim 13, **characterised in that** the slide valve (97) comprises a longitudinal passage (98) communicating at one end of the slide valve with the supplementary sphere (83) and at the other end with the pipe (88) when the electric valve is not excited.

## Patentansprüche

1. Regelsystem für eine Aufhängung eines Kraftfahrzeugs, das es ermöglicht, eine zusätzliche Sphäre (83) einzusetzen, um die Steifigkeit der Aufhängung zu verändern, umfassend einen Schieber (75) zur Veränderung der Steifigkeit, der sich unter der Wirkung eines hydraulischen Steuerdrucks des Schiebers, der der in der zusätzlichen Sphäre (83) vorherrschende Druck ist, verschieben kann, wobei der Schieber (75), der beweglich in einem Hohlraum (76) im Inneren eines Hydraulikblocks (C) befestigt ist, zwei Kammern (78, 79) mit variablem Volumen umfasst, die durch den Schieber (75) getrennt sind, wobei eine (78) der Kammern mit der zusätzlichen Sphäre (83) verbunden ist, **dadurch gekennzeichnet, daß** die andere Kammer (79) eine Feder (80) beherbergt, und daß der Hydraulikblock (C) Mittel (B) zur Herstellung einer Verbindung zwischen der Kammer (79), die die Feder (80) lagert, und entweder der zusätzlichen Sphäre (83) oder einer Rückleitung (36) zu dem Behälter des Hydrauliksystems umfasst.

2. System nach Anspruch 1, **dadurch gekennzeichnet, daß** die Mittel zur Herstellung einer Verbindung (B) ein Dreiwege-Magnetventil (1) umfassen.

3. System nach Anspruch 2, **dadurch gekennzeichnet, daß** das Magnetventil (1) eine Kugel (40) umfasst, die mit einer Dichtungssitzvorrichtung zusammenwirkt, und daß letztgenannte zwei diametral zur Kugel (40) entgegengesetzte Sitze (41, 42), durch die jeweils ein Abflussdurchgang (43), der mit einem der Wege (30, 32) in Verbindung steht, verläuft, und Mittel (59, 62) zur selektiven Steuerung der Kugel (40) umfasst, um diese alternativ an einen der Sitze (41, 42) anzulegen, indem sie von dem anderen (42, 41) entfernt wird, und daß der Raum (54) zwischen den Sitzen mit einem dritten Weg (31) in Verbindung steht.

4. System nach Anspruch 3, **dadurch gekennzeichnet, daß** eine Kugelführung (46) zwischen den beiden Sitzen (41, 42) angeordnet ist und die gegenüber liegenden Seiten der beiden Sitze mindestens eine Nut (44) zur Herstellung einer Verbindung zwischen dem Durchgang (43) des Sitzes und dem Raum (54) zwischen den beiden Sitzen umfasst.

5. System nach Anspruch 4, **dadurch gekennzeichnet, daß** die Nuten (44) vorzugsweise in der Zahl von vier vorhanden sind, die zueinander senkrecht angeordnet sind.

6. System nach einem der Ansprüche 4 und 5, **dadurch gekennzeichnet, daß** die Sitze (41, 42) kreisförmig sind, daß die Kugelführung (46) in einen Kreis mit demselben Durchmesser wie jener der Sitze eingeschrieben ist und drei Abflachungen (48) aufweist, die winkelig um 120 ° zueinander versetzt sind, daß die von den Sitzen (41, 42) und der zwischen diesen angeordneten Kugelführung (46) gebildete Gesamtheit in einer Lagerung (52) komplementärer Form im Inneren eines Körpers des Magnetventils (5) angeordnet ist und daß die Abflachungen (48) drei Kammern definieren, die mit dem vorgenannten dritten Weg (35) in Verbindung stehen.

7. System nach einem der Ansprüche 3 bis 6, **dadurch gekennzeichnet, daß** die beiden Dichtungssitze (41, 42) identisch sind.

8. System nach einem der Ansprüche 4 bis 7, **dadurch gekennzeichnet, daß** die Kugelführung (46) getrennt von den beiden Dichtungssitzen (41, 42) hergestellt ist.

9. System nach einem der Ansprüche 4 bis 7, **dadurch gekennzeichnet, daß** die Kugelführung (46) in jeden der beiden Dichtungssitze (41, 42) integriert ist.

10. System nach Anspruch 9, **dadurch gekennzeichnet, daß** der Sitz (41', 42') eine Kugellagerung (100) umfasst, deren Boden (101) ein konisches Profil aufweist und deren oberer ringförmiger Teil (102) eine im Wesentlichen zylindrische Kugelführungsfläche aufweist.

11. System nach einem der Ansprüche 3 bis 10, **dadurch gekennzeichnet, daß** die Dichtungssitze (41, 42) aus einem verformbaren Material, wie beispielsweise Kunststoff, hergestellt sind.

12. System nach einem der Ansprüche 3 bis 11, **dadurch gekennzeichnet, daß** die beiden Dichtungssitze (41, 42) durch Formguss hergestellt sind.

13. System nach einem der Ansprüche 1 bis 12, **dadurch gekennzeichnet, daß** der Schieber (75, 97) einen Verbindungsweg der zusätzlichen Sphäre (83) mit einer mit den Aufhängungen des Fahrzeugs verbundenen Leitung (88) sicher stellen oder unterbrechen kann, je nachdem, ob das Magnetventil elektrisch erregt ist oder nicht.

14. System nach Anspruch 13, **dadurch gekennzeichnet, daß** der Schieber (97) einen Längsdurchgang (98) umfasst, der an einem Ende des Schiebers mit der zusätzlichen Sphäre (83) und am anderen Ende mit der Leitung (88) in Verbindung steht, wenn das Magnetventil nicht erregt ist.
